# EUROPEAN PATENT APPLICATION

(11) **EP 3 438 696 A1**
(43) Date of publication of application: **06.02.2019**
(21) Application number: 18187608.7
(22) Date of filing: 06.08.2018
(51) Int. Cl.: G01S 13/93, G01S 17/93, B60W 40/076, G01S 13/68, G01S 17/66

(54) **AUTOMATED VEHICLE TRACKING SYSTEM**

(30) Priority: 04.08.2017 US 201715669163
(71) Applicant: Aptiv Technologies Limited, St. Michael (BB)
(72) Inventor: KIM, Junsung, Pittsburgh, PA 15206 (US); WEI, Junqing, Bridgeville, PA 15017 (US); XU, Wenda, Pittsburgh, PA 15213 (US)
(74) Representative: Conroy, John

(57) **Abstract**

A tracking system for semi-autonomous or autonomous operation of a host vehicle is configured to detect and monitor an object. The tracking system includes an object detection device and a controller. The object detection device is mounted to the host vehicle, and is configured to detect and monitor the object, output a first detection signal indicative of the object being detected, and output a second detection signal indicative of the object not being detected. The controller is configured to receive and associate the first detection signal to a terrain slope in a common moment in time, and receive and associate the second detection signal to a change in terrain slope in a succeeding moment in time. The controller outputs a command signal causing the host vehicle to slow down upon receipt of the second signal and the change in terrain slope, both occurring in the succeeding moment in time.

## Description

### BACKGROUND

The present disclosure relates to automated vehicles, and more particularly, to automated vehicle tracking systems of the automated vehicles.

The operation of modern vehicles is becoming increasingly autonomous, causing a decrease in driver intervention. A control feature of such a modern vehicle may cause the vehicle to recognize a moving object (e.g., another vehicle), determine various dynamics of the moving object, and react accordingly. The recognition of such moving objects may include a dimensional determination, speed, travel direction, and distance at any given moment in time. The determination of the object dynamics is desirable to provide, for example, reactionary responses by the vehicle with, or without, driver intervention. Unfortunately, in some applications, the moving object may, at least momentarily, avoid detection by the vehicle, thereby interrupting the recognition and dynamics determination of the moving object. This momentary avoidance of detection may potentially delay vehicle reaction(s), or may otherwise cause the vehicle to react conservatively.

### SUMMARY

In one, non-limiting, exemplary embodiment of the present disclosure, a tracking system for semi-autonomous or autonomous operation of a host vehicle is configured to detect and monitor an object. The tracking system includes an object detection device and a controller. The object detection device is mounted to the host vehicle, and is configured to detect and monitor the object, output a first detection signal indicative of the object being detected, and output a second detection signal indicative of the object not being detected. The controller is configured to receive and associate the first detection signal to a terrain slope in a common moment in time, and receive and associate the second detection signal to a change in terrain slope in a succeeding moment in time. The controller outputs a command signal causing the host vehicle to slow down upon receipt of the second signal and the change in terrain slope, both occurring in the succeeding moment in time.

In another, non-limiting, embodiment, an automated vehicle includes a tracking system, and a vehicle control. The tracking system includes an object detection device and a controller. The object detection device is configured to detect and monitor an object, and output a first detection signal indicative of the object being detected and a second detection signal indicative of the object not being detected. The controller is configured to receive and associate the first detection signal to a terrain slope in a common moment in time, and receive and associate the second detection signal to a change in terrain slope in a succeeding moment in time. The vehicle control is configured to receive a command from the controller when the second signal and the change in terrain slope both occur in the succeeding moment in time.

In another, non-limiting, embodiment, a computer software product is executed by a controller of a host vehicle configured to receive an object detection signal associated with monitoring of a moving object and receive a slope signal associated with the slope of a terrain upon which the host vehicle and the object are traveling to effect an automated reaction of the host vehicle based on a loss of detection of the moving object. The computer software product includes an object detection module, a slope module, and a determination module. The object detection module is configured to receive object detection signals associated with the detection and loss of detection of the moving object. The slope module is configured to receive slope information based on terrain slopes upon which the respective host vehicle and moving object are traveling upon. The determination module is configured to receive information from the object detection module and the slope module to determine if the loss of detection of the moving object is caused by differing slopes.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a side view of an automated vehicle with a tracking system traveling upon a terrain with a moving object where the vehicle and the object are traveling upon a common slope and the object is within a field of view of the tracking system;
FIG. 2 is a side view of the automated vehicle and the object traveling upon the terrain but with differing slopes, and the object is vertically outside of the field of view; and
FIG. 3 is a schematic of the automated vehicle with the tracking system.

### DETAILED DESCRIPTION

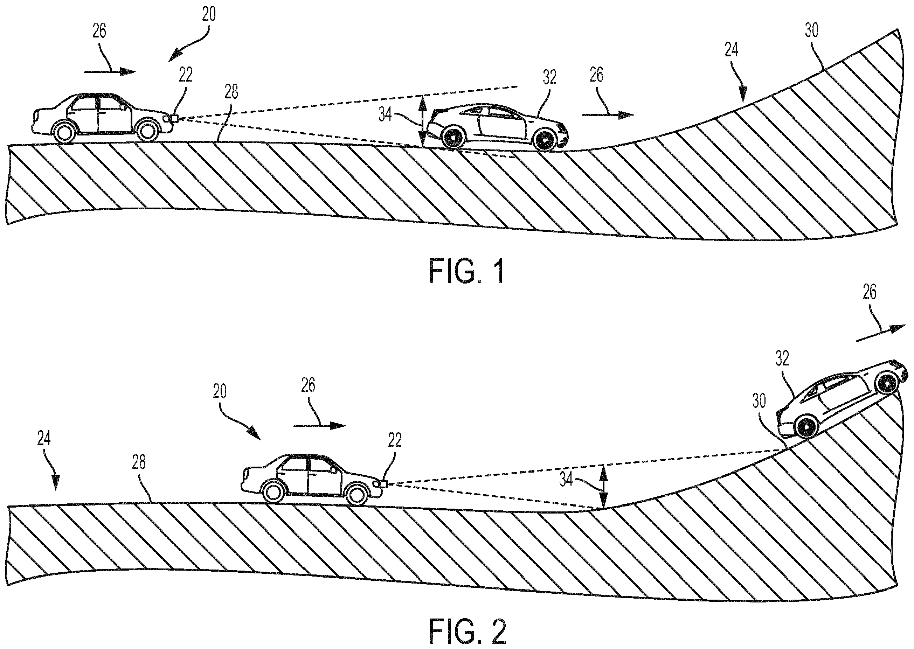

FIG. 1 illustrates a non-limiting example of a semi-autonomous or autonomous vehicle 20 (hereafter termed automated or host vehicle) that includes a tracking system 22. As illustrated, the host vehicle 20 is traveling upon a terrain 24 (e.g., roadway) in a direction (see arrow 26) that may be generally headed toward a slope or hill. The terrain 24 may include various portions 28, 30 each having different slopes. For example, the first portion 28 may be substantially flat or level and the second portion 30 (i.e., the hill) may generally slope upwards with respect to direction 26. Alternatively, portion 30 may slope downward, as oppose to upward, and may generally be a valley or dip in the terrain or roadway 24.

In FIG. 1, the tracking system 22 has detected, and is monitoring, an object 32 (e.g., a vehicle) that may be moving ahead of, in the same direction 26 as, and upon the same terrain 24 as the host vehicle 20. In a particular moment in time, the host vehicle 20 and the object 32 are traveling upon the same portion 28 of the terrain 24. During that moment in time, the tracking system 22 is able to detect and monitor the object 32 because the object is within a field, or range, of view (see arrow 34) of the tracking system 22. The field of view 34, and as illustrated, includes a vertical component such that objects above or below the vertical component of the field of view 34 may not be detectable by the tracking system 22.

Referring to FIG. 2, the tracking system 22 has lost, or no longer detects, the previously detected object 32 that may still be moving ahead of, and upon the same terrain 24 as the host vehicle 20. However, the host vehicle 20 continues to travel one the first portion 28 of the terrain 24 while the object 32 has moved on to the second portion 30 of the terrain 24. More specifically, the object 32 has reached and is now traveling upon the hill 30, thus has risen above the vertical field of view 34 of the tracking system 22. In another embodiment, the second portion 30 may generally be a valley. In this example, the object 32 may dip below the field of view 34 of the tracking system 22.

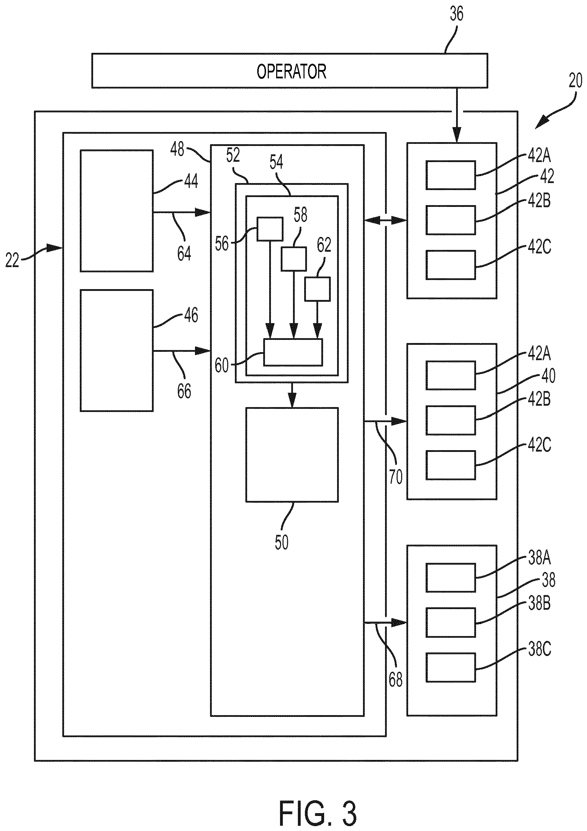

Referring to FIG. 3, in the example of a semi-autonomous vehicle 20, the host vehicle may be generally operated by a driver or operator 36 with assistance provided by the tracking system 22. In the example of a fully autonomous vehicle 20, the host vehicle may not require a driver and may seat only passenger(s). The host vehicle 20 may include the tracking system 22, a warning unit 38, a control override unit 40, and a manual control unit 42. If the host vehicle 20 is a semi-autonomous vehicle, the operator assistance provided by the tracking system 22 may be the mere activation of the warning unit 38, or may include activating the control override unit 40 that may temporarily take over the control of the manual control unit 42. The manual control unit 42 may include a directional device 42A (e.g., steering mechanism), an acceleration device 42B, and a braking device 42C of the host vehicle 20. The warning unit 38 may include, or may be, an audible device 38A, a visual device 38B, and/or a haptic device 38C.

The tracking system 22 may include an object detection device 44, a terrain slope detection device or sensor 46, and a controller 48. The controller 48 may include a processor 50 and an electronic storage medium 52. The processor 50 may be a microprocessor or other control circuitry such as analog and/or digital control circuitry including an application specific integrated circuit (ASIC) for processing data as is known by one with skill in the art. The storage medium 52 of the controller 48 may be non-volatile memory, such as electrically erasable programmable read-only memory (EEPROM) for storing one or more routines, thresholds, and captured data, hereafter referred to as an application 54 (e.g., a computer software product). The application 54 may be executed by the processor 50 of the controller 48 to at least recognize when the moving object 32 initially detected by the object detection device 44 is no longer detected by the same device because the moving object 32 has moved vertically outside of the field of view 34 of the detection device 44. When this condition is recognized, the application 54 may function to initiate a command signal to, and/or cause an appropriate reaction of, the host vehicle 20.

The object detection device 44 and the slope sensor 46 may be mounted to and toward the front of the host vehicle 20. The slope sensor 46 is generally configured to detect upcoming changes in slope of the terrain 24. The object detection device 44 may be any number of a Light Detection and Ranging (LiDAR) device, an imaging device (e.g., camera and/or video), a radar device, and others.

The application 54 may include a detection module 56, a slope module 58, a determination module 60, and an information file or database 62. The detection module 56 is configured to receive various detection signals 64 from the object detection device 44. For example, a first detection signal 64 may be indicative of the object 32 being detected, and a second detection signal 64 may be indicative of a loss in detection of the object.

The slope module 58 may be configured to receive a slope signal 66 from the slope sensor 46 that is indicative of an upcoming slope change in the terrain 24. For example, as the host vehicle 20 is traveling upon the first portion of the terrain 24, and prior to reaching the second portion 30 (i.e., hill), the slope module 58 may detect, and the slope signal 66 may be indicative of, a change in an upcoming slope. In the example of the object detection device 44 being a LiDAR device, the LiDAR device may also function as the slope sensor 46. In yet another example, the tracking system 22 may not include a slope sensor 46, and instead, may rely on preprogrammed elevation data as part of the database 62, and/or may rely on Global Positioning System (GPS) data.

The determination module 56 may apply data process and/or received by the modules 56, 58 and database 62 to generate a reaction of the host vehicle 20 due to a loss in detection of the moving object 32 due to the object experiencing a change in slope of the terrain 24 prior to the host vehicle 20 driving upon, or experiencing, the same change in slope condition. In one example, the determination module 56 may send a command signal 68 (i.e., warning command) as the vehicle reaction to the warning unit 38 to alert a driver of the loss in detection of the moving object 32. In another embodiment, the determination module 60 may send a command signal 70 to the manual override unit 40 to automatically control the vehicle controls 42. It is understood that for a fully automated vehicle 20, the controls 42 may be continuously automated (i.e., not manual), therefore the override unit 40 itself may not exist. One example of a vehicle reaction may include the slowing down of the vehicle via actuation of the braking device 42C.

During operation of the tracking system 22, the host vehicle 20 and the moving object 32 may be traveling along the portion 28 of the terrain 24 having a substantially consistent slope. During this moment in time, the host vehicle 20 and the moving object 32 may both be traveling in a generally common direction 26, and the object detection device 44 may be detecting and monitoring the object 32 within its field of view 34 that may be fixed.

Also during this initial moment in time, the object detection device 44 may output an object signal 64 to the controller 48. The object signal 64, in this instance, is indicative of the object 32 being detected. The object module 56 may receive and process the signal 64 to confirm the object has been, and continues to be detected. This detection may generally be stored in the storage medium 52 of the controller 48 as part of the database 62. At this point, the determination module 60 may, or may not receive an input from the object module 56. If an input is received, the determination module 60 may determine that a vehicle reaction is not required.

In one embodiment, and during the initial moment in time, a slope sensor 46 may be sending a slope signal 66 to the slope module 58 of the application 54. The slope sensor 46 generally functions to monitor the slope of the terrain 24 generally ahead of the host vehicle 20. That is, the slope sensor 46 may be monitoring the slope of the terrain upon which the host vehicle is traveling and the slope of the terrain upon which the moving object 32 is traveling. The slope module 58, during the initial moment in time, may determine that the terrain slope is not changing, and may send this result to the determination module 60. In an alternative embodiment, the determination that the terrain slope is not changing may be established from information as part of the database 62.

During the initial moment in time, and if the tracking system 22 loses, or no longer detects, the moving object 32, the determination module 60 has sufficient information to determine that the moving object did not escape the field of view 34 vertically. Instead, the determination module 60 may determine that the moving object 32 may have turned left, or right, and is therefore no longer in front of the host vehicle 20, or is no longer one a common roadway. As such, the determination module 60 may determine that a vehicle reaction is not needed.

Where the host vehicle 20 and the moving object 32 continue to move in direction 26 and upon a common roadway (as one example), the moving object 32 may begin to travel upon the portion 30 of the terrain 24 (i.e., illustrated as a hill). At this 'succeeding' moment in time, the host vehicle 20 may continue to travel upon the portion 28 of the terrain 24. Because the portions 28, 30 have differing slopes, the moving object 32 appears to rise with respect to the field of view 34 of the tracking system 22 of the host vehicle 20. This rise continues with forward motion of the moving object 32 up the hill or portion 30 until the moving object is substantially out of the field of view 34, and is thus no longer detectable by the tracking system 22. It is contemplated and understood that similar principles will apply if the portion 30 of the terrain 24 dips down into a valley instead of a hill.

Also during this succeeding moment in time, the object detection device 44 may send an object signal 64 indicative of the moving object no longer being detected, and the slope sensor 46 sends a slope signal 66 indicative of a changing terrain slope (i.e., from terrain portion 28 to terrain portion 30). The modules 56, 58 receive and process the respective signals 64, 66 and communicate the results to the determination module 60. The determination module 60 may now recognize that the loss in detection of the moving object 32 is due to a slope change, thus the moving object 32 moved vertically outside of the field of view 34 and likely remains on a common terrain or roadway. That is, the moving object 32 has not turned left or right off of the roadway. Under this condition, the determination module 60 may initiate an appropriate vehicle reaction. The vehicle reaction may include sending a command signal 68 to the warning unit 38 to alert the operator 36 of the vehicle 20, and/or may include sending a command signal 70 to the controls override unit 40 to control, for example, the braking device 42C to reduce the speed of the host vehicle 20 as a precautionary measure.

The various functions described above may be implemented or supported by a computer program that is formed from computer readable program codes, and that is embodied in a computer readable medium. Computer readable program codes may include source codes, object codes, executable codes, and others. Computer readable mediums may be any type of media capable of being accessed by a computer, and may include Read Only Memory (ROM), Random Access Memory (RAM), a hard disk drive, a compact disc (CD), a digital video disc (DVD), or other forms.

Terms used herein such as component, application, module, system, and the like are intended to refer to a computer-related entity, either hardware, a combination of hardware and software, or software execution. By way of example, an application may be, but is not limited to, a process running on a processor, a processor, an object, an executable, a thread of execution, a program, and/or a computer. It is understood that an application running on a server and the server, may be a component. One or more applications may reside within a process and/or thread of execution and an application may be localized on one computer and/or distributed between two or more computers

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

### Embodiments

Although the present invention is defined in the attached claims, it should be understood that the present invention can also (alternatively) be defined in accordance with the following embodiments:
1. A tracking system for semi-autonomous or autonomous operation of a host vehicle is configured to detect and monitor an object, the tracking system comprising:
   an object detection device mounted to the host vehicle and being configured to detect and monitor the object and output a first detection signal indicative of the object being detected and a second detection signal indicative of the object not being detected; and
   a controller configured to receive and associate the first detection signal to a terrain slope in a common moment in time, and receive and associate the second detection signal to a change in terrain slope in a succeeding moment in time, wherein the controller outputs a command signal causing the host vehicle to slow down upon receipt of the second signal and the change in terrain slope both occurring in the succeeding moment in time.
2. The tracking system set forth in embodiment 1, wherein the object is moving.
3. The tracking system set forth in embodiment 2, wherein the object is moving in substantially the same direction as the host vehicle.
4. The tracking system set forth in embodiment 3, wherein the object and the host vehicle are moving upon a common roadway.
5. The tracking system set forth in embodiment 1, wherein the object detection device includes a field of view and the controller is configured to detect the object moving vertically with respect to the field of view.
6. The tracking system set forth in embodiment 5, wherein the object detection device is a LiDAR device.
7. The tracking system set forth in embodiment 5, wherein the object detection device is an imaging device.
8. The tracking system set forth in embodiment 5, wherein the object detection device is a radar device.
9. The tracking system set forth in embodiment 1, wherein the controller includes a processor configured to receive and process the first and second signals, and an electronic storage medium configured to store the first detection signal and the terrain slope during the common moment in time.
10. The tracking system set forth in embodiment 9, wherein terrain slope and the change in terrain slope is determined by the processor from terrain data stored in the electronic storage medium.
11. The tracking system set forth in embodiment 1, further comprising:
   a slope detection device configured to detect terrain slope and output a first slope signal indicative of the terrain slope and a second slope signal indicative of the change in terrain slope, both received by the controller.
12. An automated vehicle comprising:
   a tracking system including an object detection device configured to detect and monitor an object and output a first detection signal indicative of the object being detected and a second detection signal indicative of the object not being detected, and a controller configured to receive and associate the first detection signal to a terrain slope in a common moment in time, and receive and associate the second detection signal to a change in terrain slope in a succeeding moment in time; and
   a vehicle control configured to receive a command from the controller when the second signal and the change in terrain slope both occur in the succeeding moment in time.
13. The automated vehicle set forth in embodiment 12, wherein the controller is a braking device.
14. The automated vehicle set forth in embodiment 12, wherein the command initiates a reduction in vehicle speed.
15. The automated vehicle set forth in embodiment 12, wherein the object detection device includes a field of view and the controller is configured to detect the object moving vertically with respect to the field of view.
16. The automated vehicle set forth in embodiment 12, wherein the controller includes a processor configured to receive and process the first and second signals, and an electronic storage medium configured to store the first detection signal and the terrain slope during the common moment in time.
17. The automated vehicle set forth in embodiment 12, further comprising:
   a slope detection device configured to detect terrain slope and output a first slope signal indicative of the terrain slope and a second slope signal indicative of the change in terrain slope, both received by the controller.
18. A computer software product executed by a controller of a host vehicle configured to receive an object detection signal associated with monitoring of a moving object and receive a slope signal associated with the slope of a terrain upon which the host vehicle and the object are traveling to effect an automated reaction of the host vehicle based on a loss of detection of the moving object, the computer software product comprising:
   an object detection module configured to receive object detection signals associated with the detection and loss of detection of the moving object;
   a slope module configured to receive slope information based on terrain slopes upon which the respective host vehicle and moving object are traveling upon;
   a determination module configured to receive information from the object detection module and the slope module to determine if the loss of detection of the moving object is caused by differing slopes.
19. The computer software product set forth in embodiment 18, wherein if the cause of the loss of detection of the moving object is differing slopes, the determination module is configured to output a command signal that effects an operator warning.
20. The computer software product set forth in embodiment 18, wherein if the cause of the loss of detection of the moving object is differing slopes, the determination module is configured to output a command signal that effects a reduction of vehicle speed.

## Claims

1. A tracking system (22) for semi-autonomous or autonomous operation of a host vehicle (20), the tracking system (22) comprising:
an object detection device (44) mounted to the host vehicle (20), the object detection device (44) being configured to detect and monitor an object (32), and output a first detection signal (64) indicative of the object (32) being detected and a second detection signal (64) indicative of the object (32) not being detected; and
a controller (48) configured to
receive the first detection signal (64), and associate the first detection signal (64) to a terrain slope in a common moment in time, and
receive the second detection signal (64), and associate the second detection signal (64) to a change in terrain slope in a succeeding moment in time,
wherein the controller (48) outputs a command signal (70) causing the host vehicle (20) to slow down upon receipt of the second detection signal (64) and association of the second detection signal (64) with the change in terrain slope both occurring in the succeeding moment in time.

2. The tracking system (22) of claim 1, wherein the object (32) is moving.

3. The tracking system (22) of claim 2, wherein
the object (32) is moving in substantially the same direction as the host vehicle (20), and optionally
the object (32) and the host vehicle (20) are moving upon a common roadway (24).

4. The tracking system (22) of claim 1, wherein
the object detection device (44) includes a field of view (34) and the controller (48) is configured to detect the object (32) moving vertically with respect to the field of view (34), and optionally
the object detection device (44) is a LiDAR device, or an imaging device, or a radar device.

5. The tracking system (22) of claim 1, wherein
the controller (48) includes
a processor (50) configured to receive and process the first and second detection signals (64), and
an electronic storage medium (52) configured to store the first detection signal (64) and the terrain slope during the common moment in time, and optionally
terrain slope and the change in terrain slope is determined by the processor (50) from terrain data (62) stored in the electronic storage medium (52.

6. The tracking system (22) of claim 1, further comprising:
a slope detection device (46) configured to detect the terrain slope and output a first slope signal (66) indicative of the terrain slope and a second slope signal (66) indicative of the change in terrain slope, both the first and second slope signals (66) received by the controller (48).

7. An automated vehicle (20) comprising:
a tracking system (22) including
an object detection device (44) configured to detect and monitor an object (32) and output a first detection signal (64) indicative of the object (32) being detected and a second detection signal (64) indicative of the object (32) not being detected, and
a controller (48) configured to
receive the first detection signal (64), and associate the first detection signal (64) to a terrain slope in a common moment in time, and
receive the second detection signal (64), and associate the second detection signal (64) to a change in terrain slope in a succeeding moment in time; and
a vehicle control (40, 42) configured to receive a command (70) from the controller (48) when the second detection signal (64) and the change in terrain slope both occur in the succeeding moment in time.

8. The automated vehicle (20) of claim 7, wherein the vehicle control (40, 42) is a braking device (42C).

9. The automated vehicle (20) of claim 7, wherein the command (70) initiates a reduction in vehicle speed.

10. The automated vehicle (20) of claim 7, wherein the object detection device (44) includes a field of view (34) and the controller (48) is configured to detect the object (32) moving vertically with respect to the field of view (34).

11. The automated vehicle (20) of claim 7, wherein the controller (48) includes
a processor (50) configured to receive and process the first and second detection signals (64), and
an electronic storage medium (52) configured to store the first detection signal (64) and the terrain slope during the common moment in time.

12. The automated vehicle (20) of claim 7, further comprising:
a slope detection device (46) configured to detect the terrain slope and output a first slope signal (66) indicative of the terrain slope and a second slope signal (66) indicative of the change in terrain slope, both the first and second slope signals (66) received by the controller (48).

13. A computer readable medium encoding a computer software product (54) comprising an object detection module (56), a slope module (58), and a determination module (60) wherein the computer software product (54) causes a controller (48) of a host vehicle (20) to perform operations comprising:
when the controller (48) executes the object detection module (56), receiving object detection signals (64) associated with detection and loss of detection of a moving object (32), wherein the host vehicle (20) and the object (32) are traveling upon a terrain (24);
when the controller (48) executes the slope module (58), receiving slope information based on slopes of the terrain (24) upon which the respective host vehicle (20) and moving object (32) are traveling upon; and
when the controller (48) executes the determination module (60)
receiving information from the object detection module (56) and the slope module (58), and
determining if the loss of detection of the moving object (32) is caused by differing slopes.

14. The computer readable medium of claim 13, wherein the operations further comprise,
if the cause of the loss of detection of the moving object (32) is differing slopes, when the controller (48) executes the determination module (60), outputting a command signal (68) that effects an operator warning.

15. The computer readable medium of claim 13, wherein the operations further comprise,
if the cause of the loss of detection of the moving object is differing slopes, when the controller (48) executes the determination module (60), outputting a command signal (70) that effects a reduction of vehicle speed.
